# DEMANDE DE BREVET EUROPEEN

(11) **EP 2 333 564 A1**
(43) Date de publication de la demande: **15.06.2011**
(21) Numéro de dépôt: 10194184.7
(22) Date de dépôt: 08.12.2010
(51) Int. Cl.: G01P 5/26, G01S 17/58

(54) **Sonde anémométrique bi-statique asservie**

(30) Priorité: 11.12.2009 FR 0906001
(71) Demandeur: Thales, 92200 Neuilly Sur Seine (FR)
(72) Inventeur: Renard, Alain, 26120 Chabeuil (FR); Rondeau, Philippe, 26320 Saint Marcel Les Valence (FR); Lacondemine, Xavier, 26000 Valence (FR)
(74) Mandataire: Bréda, Jean-Marc

(57) **Abrégé**

Le domaine général de l'invention est celui des sondes anémométriques optiques dite « bi-statique » comportant une première tête optique d'émission (103) éclairant une zone de mesure et une seconde tête optique de réception (104). La sonde selon l'invention comporte:
- des moyens opto-mécaniques (112) de déplacement permettant de faire osciller l'un des axes optiques des têtes optiques autour d'une direction dite direction de mesure, l'axe oscillant déplacé étant noté axe optique mobile;
- des moyens de mesure (106,107,108,109) agencés de façon à fournir l'intensité du faisceau rétrodiffusé en fonction de temps, ladite intensité variant dans le temps en fonction des oscillations de l'axe optique;
- un dispositif d'asservissement (110,111) relié aux moyens de mesure et aux moyens opto-mécaniques de déplacement, ledit dispositif d'asservissement comprenant des fonctions permettant d'une part, de déterminer, à partir de la connaissance de la variation de l'intensité du faisceau rétrodiffusé, l'écart entre la direction de mesure de l'axe optique mobile et une direction dite optimale permettant d'obtenir un maximum d'intensité du faisceau rétrodiffusé et d'autre part, d'asservir la direction dudit axe optique mobile sur la direction dite optimale.

## Description

Le domaine de l'invention est celui de l'anémométrie optique et en particulier de l'anémométrie optique embarquée sur aéronef.

Pour piloter un aéronef, il est nécessaire de connaître au moins son altitude relative, sa vitesse par rapport à l'air ambiant et son incidence. Ces différentes données peuvent être mesurées localement, en champ proche, au voisinage de la peau de l'aéronef ou en champ lointain, en dehors du champ aérodynamique créé par l'appareil. Les données en champ proche sont obtenues classiquement par la mesure d'un certain nombre de paramètres aérodynamiques. Les données en champ lointain sont effectuées par des dispositifs d'anémométrie optique appelés « LIDAR », acronyme de « Llght Detection And Ranging ». Un LIDAR émet et reçoit de la lumière selon un axe de mesure déterminé. Dans les architectures d'anémomètres LIDAR classiques, on éclaire l'atmosphère avec un faisceau laser et on collecte la puissance rétrodiffusée par les particules et/ou les molécules présentes sur le trajet du faisceau. La vitesse longitudinale des particules diffusantes par rapport au système LIDAR, produit alors un décalage Doppler qui est mesuré après une détection hétérodyne. Dans un grand nombre d'applications, on souhaite connaître la distance à laquelle se situent les diffuseurs qui ont produit le signal reçu. A cette fin, plusieurs méthodes peuvent être utilisées :
- utilisation d'une source laser pulsée. On mesure le temps de vol de l'onde pour connaître la distance de mesure ;
- focalisation du faisceau d'émission. La zone de focalisation du faisceau est plus efficace pour l'éclairement et la collection du signal rétrodiffusé ;
- Mise en oeuvre de systèmes dits « bi-statiques » ou les optiques d'émission et de collection sont distinctes. Seul le volume de superposition du faisceau d'éclairement et de l'efficacité de collection produit un signal.

Dans le cas des sondes de vélocimétrie LiDAR embarquée sur aéronef, ces solutions présentent certains inconvénients détaillés ci-dessous :
- La solution laser pulsée peut poser certains problèmes de stabilité de longueur d'onde du faisceau laser émis et d'élargissement spectral du signal reçu dû à la faible durée du pulse, nécessaire pour atteindre une précision sur la distance suffisante ;
- La solution de sélectivité par focalisation présente une atténuation des échos lointains qui n'est que proportionnel au carré de la distance entre le point de focalisation et l'écho dur lointain qui peut être un nuage ou le sol, cette sélectivité se révèle alors insuffisante ;
- Enfin, l'utilisation de systèmes bi-statiques présente une bonne sélectivité spatiale mais est très sensible aux désalignements respectifs de l'optique d'émission et de l'optique de réception, ce qui la rend généralement difficilement utilisable sur un système embarqué.

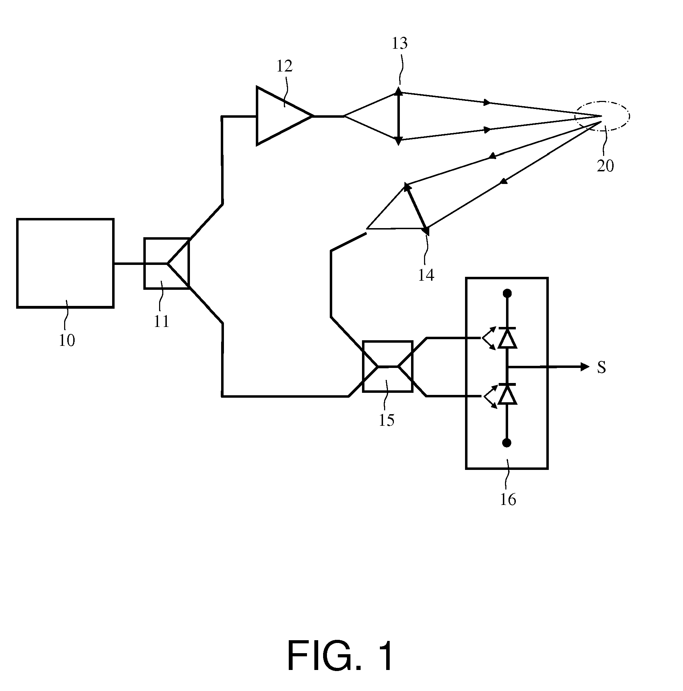

Une architecture classique bi-statique est illustrée sur la figure 1: Elle comprend essentiellement
- Une source laser 10 fournissant une onde de référence polarisée linéairement ;
- Un dispositif séparateur 11 qui peut être, à titre d'exemple, un diviseur 50/50 partageant la puissance fournie par cette source en deux voies que l'on appelle voie de référence et voie de puissance ;
- La voie de puissance prend l'une des deux sorties du dispositif séparateur 11 en entrée, passe à travers l'amplificateur optique 12, puis la projette dans l'atmosphère, à la distance de mesure souhaitée par un premier télescope 13 créant ainsi un volume éclairé;
- Un second télescope 14 récolte le flux rétrodiffusé par les sources présentes dans son volume d'efficacité de collection (particules, aérosols,...) et le couple dans la voie de retour du signal ;
- L'intersection du volume éclairé par le télescope 13 et du volume d'efficacité de collection du télescope 14 produit le volume de mesure 20 qui génère le signal doppler ;
- Un dispositif de mélange 15, qui peut être un interféromètre ou, lorsque les faisceaux optiques sont fibrés, un coupleur optique, permet la recombinaison cohérente de l'onde rétrodiffusée et de l'onde venant de la voie de référence sur deux faisceaux dirigés vers les deux diodes d'un détecteur équilibré 16 qui délivre un signal de mesure S. L'onde de référence est orientée selon la même polarisation que le signal collecté par des moyens optiques appropriés non représentés sur la figure 1.

Pour donner des ordres de grandeur, la précision de l'alignement des faisceaux issus des premier et second télescopes doit être inférieure à quelques microradians. De telles précisions sont très difficiles à conserver sur des dispositifs embarqués sur aéronefs, compte-tenu de l'environnement thermique et vibratoire de l'appareil.

Le dispositif selon l'invention permet de pallier ces inconvénients. L'invention consiste à introduire un asservissement de la direction de l'un des deux télescopes afin que leurs faisceaux d'éclairement et d'efficacité de collection soient toujours sécants. Le procédé de mise en oeuvre de l'invention peut comporter une phase initiale d'acquisition afin de localiser l'intersection des faisceaux en cas de calage initial peu précis puis une phase de poursuite afin de fournir le signal rétrodiffusé le plus puissant possible. La solution envisagée permet d'atteindre une très bonne sélectivité et une bonne précision. De plus, elle s'adapte facilement sur les architectures bi-statiques existantes au moyen de modifications mineures. Elle est parfaitement adaptée aux conditions de mesure et à l'atmosphère et présente une grande insensibilité aux dérives dues, par exemple, aux environnements sévères.

Plus précisément, l'invention a pour objet une sonde anémométrique optique dite « bi-statique » comportant au moins une première tête optique d'émission et une seconde tête optique de réception, la première tête optique étant orientée selon un premier axe optique et focalisant un faisceau d'émission dans une zone de mesure, la seconde tête optique de réception étant orientée selon un second axe optique différent du premier axe optique et collectant un faisceau rétrodiffusé par la dite zone de mesure, la sonde comportant également des moyens de mesure du faisceau rétrodiffusé par la seconde tête optique de réception, **caractérisé en ce que** la sonde comporte :
- des moyens opto-mécaniques de déplacement permettant de déplacer le premier ou le second axe optique selon au moins une direction dite direction de mesure, l'axe optique déplacé étant noté axe optique mobile ;
- les moyens de mesure étant agencés de façon à fournir l'intensité du faisceau rétrodiffusé dans au moins deux directions situées de part et d'autre de la direction de mesure et notées directions d'asservissement ;
- un dispositif d'asservissement relié aux moyens de mesure et aux moyens opto-mécaniques de déplacement, ledit dispositif d'asservissement comprenant des fonctions permettant :
   ○ d'une part, de déterminer, à partir de la connaissance de l'intensité du faisceau rétrodiffusé dans les deux directions d'asservissement, l'écart entre la direction de mesure de l'axe optique mobile et une direction dite optimale permettant d'obtenir un maximum d'intensité du faisceau rétrodiffusé ;
   ○ et d'autre part, d'asservir la direction dudit axe optique mobile sur la direction dite optimale.

La sonde selon l'invention comporte deux modes de réalisation.

Avantageusement, dans un premier mode de réalisation, les moyens de mesure comprennent un détecteur central et deux premiers détecteurs latéraux situés de part et d'autre dudit détecteur central, des moyens permettant de déterminer, à partir de la connaissance des signaux issus des détecteurs latéraux, l'écart entre la direction de mesure de l'axe optique mobile et la direction dite optimale. De façon préférentielle, les moyens de mesure comprennent deux seconds détecteurs latéraux situés de part et d'autre dudit détecteur central, les quatre détecteurs étant disposés selon un losange, les moyens de mesure comprenant des moyens permettant de déterminer, à partir de la connaissance des signaux issus des quatre détecteurs latéraux, les écarts dans deux plans perpendiculaires entre la direction de mesure de l'axe optique mobile et la direction dite optimale.

Avantageusement, dans un second mode de réalisation, la sonde comporte des moyens opto-mécaniques de déplacement permettant de faire osciller l'axe optique mobile autour de la direction de mesure, les moyens de mesure étant agencés de façon à fournir l'intensité du faisceau rétrodiffusé en fonction du temps, ladite intensité variant dans le temps en fonction des oscillations de l'axe optique et le dispositif d'asservissement comprenant des moyens permettant de déterminer, à partir de la connaissance de la variation d'intensité du faisceau rétrodiffusé, l'écart entre la direction de mesure de l'axe optique oscillant et la direction dite optimale. De façon préférentielle, le dispositif d'asservissement comporte un dispositif électronique de commande des moyens opto-mécaniques de déplacement, ledit dispositif électronique de commande comprenant un générateur d'excitation, un démodulateur synchrone relié aux moyens de mesure et au générateur d'excitation, un filtre de boucle d'asservissement relié au démodulateur synchrone et un sommateur dont les entrées sont reliées au démodulateur synchrone et au générateur d'excitation et la sortie aux moyens opto-mécaniques de déplacement, le démodulateur synchrone assurant des fonctions permettant de déterminer, à partir de la connaissance de la variation d'intensité du signal rétrodiffusé, l'écart entre la direction actuelle de l'axe optique oscillant et la direction optimale permettant d'obtenir un maximum d'intensité du faisceau rétrodiffusé. La direction de déplacement de l'axe optique oscillant peut se faire dans un plan passant par le premier et le second axe optique.

L'invention sera mieux comprise et d'autres avantages apparaîtront à la lecture de la description qui va suivre donnée à titre non limitatif et grâce aux figures annexées parmi lesquelles :
La figure 1 représente une sonde anémométrique bistatique selon l'art antérieur ;
La figure 2 représente une sonde anémométrique bistatique comprenant une premier mode de réalisation de l'asservissement selon l'invention ;
La figure 3 représente une sonde anémométrique bistatique comprenant un second mode de réalisation de l'asservissement selon l'invention.

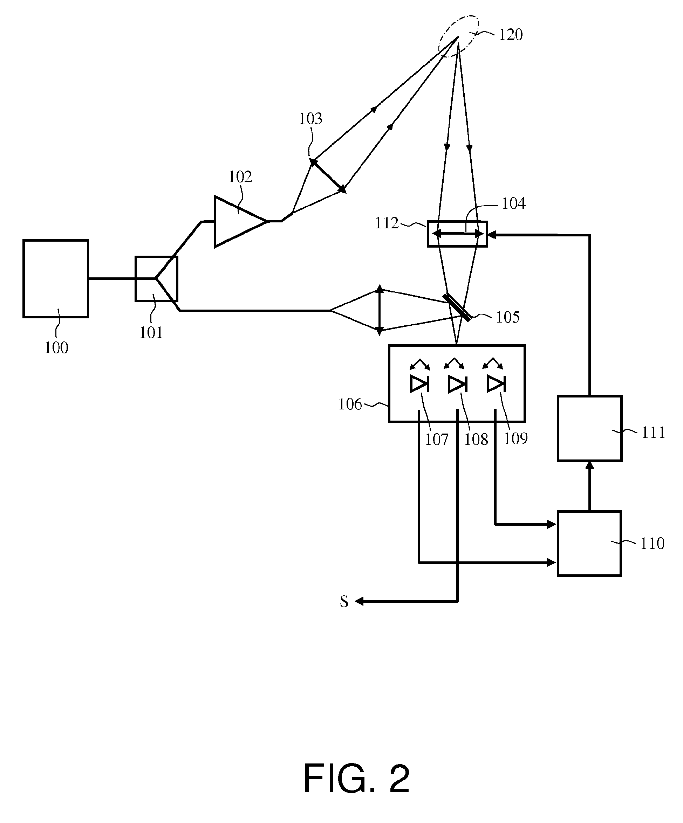

A titre de premier exemple non limitatif, la figure 2 représente l'architecture d'une sonde anémométrique bistatique avec un premier type d'asservissement selon l'invention. Dans l'architecture représentée, les différents éléments optiques ou optoélectroniques sont reliées entre eux par des fibres optiques à maintien de polarisation. La sonde comprend :
- Une source laser 100 fournissant une onde de référence polarisée linéairement ;
- Un dispositif séparateur 101 partageant la puissance fournie par cette source en deux voies : la voie de référence et la voie de puissance. Ce dispositif 101 peut être, à titre d'exemple, un diviseur 50/50 ;
- La voie de puissance prend l'une des deux sorties du dispositif séparateur 101 en entrée, passe à travers l'amplificateur 102, puis la projette dans l'atmosphère, à la distance de mesure souhaitée par une première tête optique ou un premier télescope 103. On forme ainsi un volume de mesure 120 ;
- Une seconde tête optique ou un second télescope 104 récolte une partie du flux rétrodiffusé par le volume de mesure 120 et fournit en sortie le signal doppler ;
- Un dispositif de mélange qui est un interféromètre classique à lame séparatrice 105 dans le cas de la figure 2. Ce dispositif peut être, dans le cas de sondes fibrées, un coupleur optique. Il permet la recombinaison cohérente des deux faisceaux venant d'une part de la voie de référence et d'autre part de la voie de mesure vers les trois diodes d'un ensemble de détection 106, l'onde de référence étant orientée selon la même polarisation que le signal collecté.

La sonde comprend également des moyens permettant de positionner l'axe optique de la seconde tête optique de façon qu'il croise au mieux l'axe optique de la première tête optique. On obtient ainsi le maximum de volume de mesure commun entre les deux têtes optiques. De façon évidente, lorsque l'axe optique est dans cette direction optimale, l'intensité du signal rétrodiffusé est maximale.

Pour déterminer si la direction de mesure correspond effectivement à cette direction optimale, on place dans le plan de focalisation de la tête optique de réception trois détecteurs disposés en ligne, un détecteur central 108 et deux détecteurs latéraux 107 et 109 situés de part et d'autre du détecteur central. Le détecteur central 108 délivre le signal de mesure S et les deux détecteurs latéraux 107 et 109 sont utilisés pour l'asservissement. Les détecteurs latéraux captent donc un signal rétrodiffusé dans une direction légèrement différente de la direction de mesure. Si ces signaux latéraux sont de même intensité et que cette intensité est plus faible que celle délivrée par le détecteur central, on peut estimer que la direction de mesure correspond à la direction optimale. Si ce n'est pas le cas, alors, l'écart d'amplitude entre les signaux latéraux est représentatif de l'écart angulaire existant entre la direction de mesure et la direction optimale.

Cet écart peut être facilement mesuré par le comparateur 110, puis intégré par l'intégrateur 111 afin de générer une commande continue appliqué au dispositif de commande 112 des moyens opto-mécaniques de déplacement permettant de déplacer l'axe optique du télescope 104. Bien entendu, il est également possible de laisser ce télescope fixe et de déplacer la tête optique 103. On obtient le même type d'asservissement. Il existe différents moyens 112 permettant d'orienter l'axe optique du télescope 104. A titre de premier exemple, le télescope 104 peut être monté sur un dispositif mécanique de positionnement angulaire déplaçant l'ensemble du télescope. Il est également possible de déplacer un des éléments optiques de la tête optique ou d'ajouter devant le télescope un élément mobile en rotation comme un diasporamètre. On peut encore déplacer le support mécanique portant les trois détecteurs de mesure et d'asservissement. Le système représenté en figure 2 permet d'asservir la direction de mesure dans un plan donné, en l'occurrence le plan de la feuille. A priori, un asservissement dans un seul axe n'est indispensable que dans la direction orthogonale au plan des deux télescopes d'émission et de réception, compte tenu des caractéristiques de ceux-ci. Cependant, le même principe peut être appliqué simultanément dans une direction parallèle au plan de la feuille. Il suffit pour cela que les moyens de mesure comprennent deux seconds détecteurs latéraux situés de part et d'autre du détecteur central, les quatre détecteurs étant disposés selon un losange, les moyens de mesure comprenant des moyens permettant de déterminer, à partir de la connaissance des signaux issus des quatre détecteurs latéraux, les écarts dans deux plans perpendiculaires entre la direction de mesure de l'axe optique mobile et la direction optimale. Cette mise en place ne présente pas de difficultés particulières. Toujours en restant dans le cadre de cette invention, on peut envisager d'autres combinaisons de détecteurs.

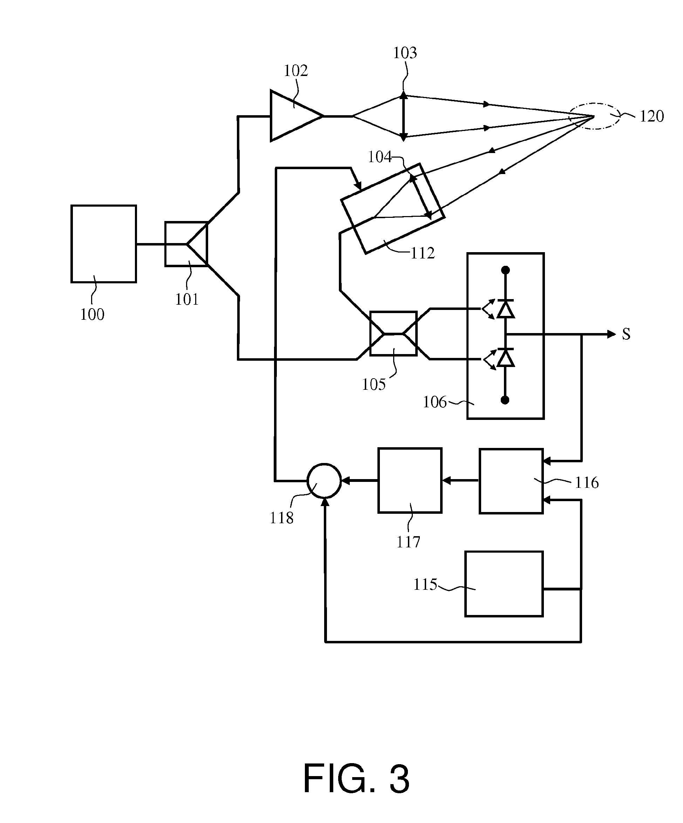

A titre de second exemple non limitatif, la figure 3 représente l'architecture d'une sonde anémométrique bistatique avec un second asservissement selon l'invention. Dans l'architecture représentée, les différents éléments optiques ou optoélectroniques sont reliés entre eux par des fibres optiques à maintien de polarisation. La sonde comprend comme précédemment :
- Une source laser 100 ;
- Un dispositif séparateur 101;
- Une voie de puissance comportant un amplificateur 102 et une première tête optique ou un premier télescope 103. On forme ainsi un volume de mesure 120 ;
- Une seconde tête optique ou un second télescope 104 de réception qui fournit en sortie le signal doppler S ;
- Un dispositif de mélange 105 ;
- Un détecteur équilibré 106 à deux diodes de détection.

La sonde comprend également des moyens permettant de positionner l'axe optique de la seconde tête optique de façon qu'il croise au mieux l'axe optique de la première tête optique, direction dite optimale. Si l'on fait osciller l'axe optique autour de cette direction optimale, l'intensité du signal varie de façon symétrique autour de ce maximum. Si l'amplitude du signal varie de façon dissymétrique autour d'un maximum, cela signifie que la direction moyenne de l'oscillation ne correspond plus à la direction optimale. Dans ce cas, l'écart d'amplitude correspondant aux positions extrêmes de l'oscillation est significatif de la correction à faire. On peut facilement asservir les oscillations de façon que l'intensité du signal rétrodiffusé varie de façon symétrique autour d'un maximum. On est alors sûr que l'oscillation se fait autour de la direction optimale.

Les différents moyens nécessaires permettant de réaliser ce type d'asservissement sont :
- des moyens opto-mécaniques 112 de déplacement permettant d'une part de déplacer l'axe optique du télescope 104 selon au moins une direction et permettant d'autre part de faire osciller ledit axe autour de ladite direction. Ces moyens ont été décrits dans le cadre du mode de réalisation précédent ;
- Un agencement des moyens de mesure 106 de façon à fournir l'intensité du faisceau rétrodiffusé, ladite intensité variant dans le temps en fonction des oscillations de l'axe optique du télescope 104 ;
- un dispositif d'asservissement relié aux moyens de mesure et aux moyens opto-mécaniques de déplacement 112, ledit dispositif d'asservissement comprenant des fonctions permettant :
   ○ d'une part, de déterminer, à partir de la connaissance de la variation d'intensité du faisceau rétrodiffusé, l'écart entre la direction actuelle de l'axe optique oscillant du télescope 104 et une direction dite optimale permettant d'obtenir un maximum d'intensité du faisceau rétrodiffusé ;
   ○ et d'autre part, d'asservir la direction dudit axe optique oscillant sur la direction dite optimale.

Dans le cas présent, ces différentes fonctions du dispositif d'asservissement sont assurées par :
- Un générateur d'excitation 115 ;
- Un démodulateur synchrone 116 ;
- Un filtre éliminateur 117 des composantes à la fréquence d'excitation et extrayant l'écart d'alignement de la variation d'intensité du faisceau rétrodiffusé ;
- Un sommateur 118 permettant d'injecter aux moyens opto-mécaniques de déplacement 112, la somme de l'excitation venant du générateur 115 et de l'écart d'alignement venant du filtre éliminateur 117.

## Revendications

1. Sonde anémométrique optique dite « bi-statique » comportant au moins une première tête optique d'émission et une seconde tête optique de réception, la première tête optique étant orientée selon un premier axe optique et focalisant un faisceau d'émission dans une zone de mesure, la seconde tête optique de réception étant orientée selon un second axe optique différent du premier axe optique et collectant un faisceau rétrodiffusé par la dite zone de mesure, la sonde comportant également des moyens de mesure du faisceau rétrodiffusé par la seconde tête optique de réception, **caractérisé en ce que** la sonde comporte :
- des moyens opto-mécaniques de déplacement permettant de faire osciller le premier ou le second axe optique autour d'une direction dite direction de mesure, l'axe optique oscillant étant noté axe optique mobile ;
- les moyens de mesure étant agencés de façon à fournir l'intensité du faisceau rétrodiffusé en fonction du temps, ladite intensité variant dans le temps en fonction des oscillations de l'axe optique ;
- un dispositif d'asservissement relié aux moyens de mesure et aux moyens opto-mécaniques de déplacement, ledit dispositif d'asservissement comprenant des fonctions permettant :
○ d'une part, de déterminer, à partir de la connaissance de la variation de l'intensité du faisceau rétrodiffusé, l'écart entre la direction de mesure de l'axe optique mobile et une direction dite optimale permettant d'obtenir un maximum d'intensité du faisceau rétrodiffusé ;
○ et d'autre part, d'asservir la direction dudit axe optique mobile sur la direction dite optimale.

2. Sonde anémométrique optique dite « bi-statique » selon la revendication 1, **caractérisé en ce que** les moyens de mesure comprennent un détecteur central et deux premiers détecteurs latéraux situés de part et d'autre dudit détecteur central, des moyens permettant de déterminer, à partir de la connaissance des signaux issus des détecteurs latéraux, l'écart entre la direction de mesure de l'axe optique mobile et la direction dite optimale.

3. Sonde anémométrique optique dite « bi-statique » selon la revendication 2, **caractérisé en ce que** les moyens de mesure comprennent deux seconds détecteurs latéraux situés de part et d'autre dudit détecteur central, les quatre détecteurs étant disposés selon un losange, les moyens de mesure comprenant des moyens permettant de déterminer, à partir de la connaissance des signaux issus des quatre détecteurs latéraux, les écarts dans deux plans perpendiculaires entre la direction de mesure de l'axe optique mobile et la direction dite optimale.

4. Sonde anémométrique optique dite « bi-statique » selon la revendication 1, **caractérisé en ce que** le dispositif d'asservissement comporte un dispositif électronique de commande des moyens opto-mécaniques de déplacement, ledit dispositif électronique de commande comprenant un générateur d'excitation, un démodulateur synchrone relié aux moyens de mesure et au générateur d'excitation, un filtre de boucle d'asservissement relié au démodulateur synchrone et un sommateur dont les entrées sont reliées au démodulateur synchrone et au générateur d'excitation et la sortie aux moyens opto-mécaniques de déplacement, le démodulateur synchrone assurant des fonctions permettant de déterminer, à partir de la connaissance de la variation d'intensité du signal rétrodiffusé, l'écart entre la direction actuelle de l'axe optique oscillant et une direction dite optimale permettant d'obtenir un maximum d'intensité du faisceau rétrodiffusé.

5. Sonde anémométrique optique dite « bi-statique » selon la revendication 4, **caractérisé en ce que** la direction de déplacement de l'axe optique oscillant se fait dans un plan passant par le premier et le second axe optique.
